# EUROPEAN PATENT APPLICATION

(11) **EP 4 044 532 A1**
(43) Date of publication of application: **17.08.2022**
(21) Application number: 20884836.6
(22) Date of filing: 27.05.2020
(51) Int. Cl.: H04L 12/741

(54) **METHOD FOR GENERATING FORWARDING INFORMATION, DEVICE, AND SYSTEM**

(30) Priority: 05.11.2019 CN 201911071875; 10.01.2020 CN 202010027651
(71) Applicant: Huawei Technologies Co., Ltd., Shenzhen, Guangdong 518129 (CN)
(72) Inventor: HUANG, Diaowen, Shenzhen, Guangdong 518129 (CN)
(74) Representative: Goddar, Heinz J.
(86) International application number: PCT/CN2020/092716
(87) International publication number: WO 2021/088357

(57) **Abstract**

This application provides a method, an apparatus, and a system for generating forwarding information. The method includes: A first network device receives n packets, where the n packets include n media access control (MAC) addresses, and source MAC addresses of the n packets are respectively the n MAC addresses; the first network device determines n translated MAC addresses based on the n MAC addresses, where the n MAC addresses are in a one-to-one correspondence with the n translated MAC addresses, and the n translated MAC addresses belong to a first MAC address segment; the first network device stores the correspondence between the n MAC addresses and the n translated MAC addresses; and the first network device sends the first MAC address segment to a second network device. The method reduces a quantity of MAC routes locally maintained by a device such as a network provider edge router, saves device storage resources, improves query efficiency, and relieves pressure of maintaining the quantity of MAC routes.

## Description

This application claims priority to Chinese Patent Application No. CN201911071875.X, filed with the China National Intellectual Property Administration on November 5, 2019 and entitled "MAC ROUTE GENERATING METHOD AND DEVICE", and claims priority to Chinese Patent Application No. CN202010027651.5, filed with the China National Intellectual Property Administration on January 10, 2020 and entitled "METHOD, APPARATUS, AND SYSTEM FOR GENERATING FORWARDING INFORMATION", which are incorporated herein by reference in their entireties.

### TECHNICAL FIELD

This application relates to the field of communication technologies, and in particular, to a method, an apparatus, and a system for generating forwarding information.

### BACKGROUND

With development of communication technologies, an Ethernet virtual private network (Ethernet Virtual Private Network, EVPN) is widely used. A system for forwarding a packet in the EVPN may include a user-end provider edge (user-end provider edge, UPE) network device (UPE device for short below) and a network provider edge (network provider edge, NPE) network device (NPE device for short below).

The UPE device can receive a request packet generated by at least one user equipment connected to the UPE device, and a request packet generated by each user equipment carries a media access control (Media Access Control, MAC) address of the user equipment. The UPE device generates a corresponding MAC route based on a MAC address of the at least one user equipment. The UPE device sends the generated MAC route to the NPE device, so that the NPE device learns the MAC route. The NPE device forwards a packet based on the learned MAC route.

However, the UPE device is usually connected to a relatively large quantity of user equipments. As a result, the NPE device needs to learn and maintain a relatively large quantity of MAC routes. Consequently, pressure on the NPE device to locally maintain the MAC routes is relatively large, and a relatively large quantity of resources are consumed.

### SUMMARY

This application provides a method, an apparatus, and a system for generating forwarding information, so as to significantly reduce a quantity of MAC routes locally learned and maintained by a network device such as an NPE device, save storage resources, improve query efficiency, and relieve device pressure.

According to a first aspect, a method for generating forwarding information is provided. The method includes: A first network device receives n packets, where the n packets include n media access control (MAC) addresses, source MAC addresses of the n packets are respectively the n MAC addresses, and n is an integer greater than or equal to 2; the first network device determines n translated MAC addresses based on the n MAC addresses, where the n MAC addresses are in a one-to-one correspondence with the n translated MAC addresses, and the n translated MAC addresses belong to a first MAC address segment; the first network device stores the correspondence between the n MAC addresses and the n translated MAC addresses; and the first network device sends the first MAC address segment to a second network device.

The n packets may be a plurality of packets consecutively received by the first network device (for example, a UPE device), or may be some of the plurality of packets consecutively received by the first network device. This is not particularly limited in this application. The first MAC address segment includes a plurality of MAC addresses. Optionally, the first MAC address segment may be represented by using a fixed-length bit string, and the fixed-length bit string includes a fixed-bit substring part and a variable-bit substring part, where the fixed-bit substring part may be referred to as a mask. For example, a value of each bit in the fixed-bit substring is 1. Masks, namely, fixed-bit substring parts, of the plurality of MAC addresses in the first MAC address segment are the same, so as to implement aggregation of the plurality of MAC addresses. Variable-bit substring parts in the plurality of MAC addresses, other than the masks, are different from each other, so as to distinguish between the plurality of MAC addresses.

The first network device may select one MAC address from the foregoing first MAC address segment based on each of the n MAC addresses, and use the MAC address as a translated MAC address corresponding to each MAC address.

It should be noted that the first network device determines, based on the n MAC addresses carried in the received n packets, the n translated MAC addresses corresponding to the n MAC addresses, where the n translated MAC addresses belong to the first MAC address segment. The first network device stores the one-to-one correspondence between the n MAC addresses and the n translated MAC addresses, and sends the first MAC address segment to the second network device. For example, the first MAC address segment may be included in an aggregated MAC route, so that the second network device (for example, an NPE device) does not need to learn n MAC routes corresponding to the n MAC addresses, but only needs to learn one aggregated MAC route. Therefore, a quantity of MAC routes learned by the second network device is significantly reduced, storage pressure of the second network device is relieved, and network resources are saved.

Optionally, the method further includes: The first network device obtains n updated packets based on the n packets and the n translated MAC addresses, where source MAC addresses of the n updated packets are respectively the n translated MAC addresses; and the first network device sends the n updated packets. The first network device may replace, with a corresponding translated MAC address, each of source MAC addresses of n packets that exist before update, to obtain the n updated packets.

By replacing a source MAC address of a packet with a corresponding translated MAC address, a remote network device can learn the translated MAC address, so as to implement packet sending and receiving based on the translated MAC address.

Optionally, the method further includes: The first network device receives a first packet, where a first source MAC address of the first packet belongs to the n MAC addresses of the n packets; the first network device obtains a first translated packet based on the first packet and a first translated MAC address corresponding to the first source MAC address, where a source MAC address of the first translated packet is the first translated MAC address, and the first translated MAC address belongs to the n translated MAC addresses; and the first network device sends the first translated packet.

The first packet may alternatively be a request packet sent by a user equipment to the first network device, and the first network device has established a correspondence between a MAC address corresponding to the user equipment and a translated MAC address. After receiving the first packet, the first network device may extract the first source MAC address of the first packet, search for the first translated MAC address corresponding to the first source MAC address based on the stored correspondence between the n MAC addresses and the n translated MAC addresses, and then replace the first source MAC address of the first packet with the first translated MAC address, to obtain the first translated packet, so as to implement packet sending and receiving based on the translated MAC address.

Optionally, the first source MAC address of the first packet is an outer source MAC address, the first packet further includes an inner source MAC address, the inner source MAC address is the same as the outer source MAC address, and that the first network device obtains a first translated packet based on the first packet and a first translated MAC address corresponding to the first source MAC address includes: The first network device replaces each of the outer source MAC address and the inner source MAC address with the first translated MAC address corresponding to the first source MAC address, to obtain the first translated packet.

When receiving a packet of a type such as an address resolution protocol (Address Resolution Protocol, ARP), the first network device needs to replace each of an inner source MAC address and an outer source MAC address that are in the packet with a translated MAC address, so as to ensure accuracy of packet forwarding and avoid a problem such as a packet loss.

Optionally, the method further includes: The first network device receives a second packet, where a destination MAC address of the second packet includes a second translated MAC address, and the second translated MAC address belongs to the n translated MAC addresses; the first network device obtains a second translated packet based on the second packet and a second MAC address corresponding to the second translated MAC address, where a destination MAC address of the second translated packet is the second MAC address, and the second MAC address belongs to the n MAC addresses; and the first network device sends the second translated packet.

The remote network device sends a packet to the user equipment by using a translated MAC address as a destination MAC address. When receiving the packet, the first network device serving as a forwarding device can replace the destination MAC address with an original MAC address based on a locally stored correspondence between the translated MAC address and the original MAC address, so as to complete forwarding of the packet to the user equipment.

Optionally, the first MAC address segment belongs to a first aggregated MAC route sent by the first network device to the second network device, and the first aggregated MAC route further includes an IP address of the first network device. The IP address may enable a network device receiving the first MAC route to determine a port corresponding to the IP address, so that the network device successfully sends a packet to the first network device through the port.

Optionally, a quantity of MAC addresses in the first MAC address segment is greater than or equal to a quantity of user equipments connected to the first network device.

The first MAC address segment may correspond to a plurality of MAC addresses. When planning a quantity of MAC addresses to which the first MAC address segment may correspond, the first network device may consider the quantity of user equipments connected to the first network device. For example, the first network device may determine the quantity of user equipments based on a service type, a residential area, and the like. In some other cases, the first network device may alternatively determine the quantity of user equipments based on another common feature, only based on a quantity scale, or the like. Then, the first network device generates a corresponding first MAC address segment based on the determined quantity of user equipments, to ensure that the first MAC address segment can include MAC addresses corresponding to a corresponding quantity of user equipments, thereby improving ease of use and reasonableness of addresses planned by the network device.

Optionally, the method further includes: The first network device receives m packets, where the m packets include m media access control (MAC) addresses, source MAC addresses of the m packets are respectively the m MAC addresses, and m is an integer greater than or equal to 2; the first network device determines m translated MAC addresses based on the m MAC addresses, where the m MAC addresses are in a one-to-one correspondence with the m translated MAC addresses, and the m translated MAC addresses belong to a second MAC address segment; the first network device stores the correspondence between the m MAC addresses and the m translated MAC addresses; and the first network device sends the second MAC address segment to the second network device or a third network device.

According to a second aspect, a method for generating forwarding information is provided. The method includes: A first network device receives a MAC address segment sent by a second network device; the first network device generates forwarding information, where the forwarding information includes the MAC address segment; the first network device receives a packet sent by a third network device, where the packet includes a destination MAC address, and the destination MAC address belongs to the MAC address segment; and the first network device forwards the received packet to the second network device based on the destination MAC address and the forwarding information.

The first network device (for example, an NPE device) may determine corresponding forwarding information based on a destination MAC address of a packet, and then forward the packet to the second network device based on the forwarding information. The destination MAC address may be, for example, the translated MAC address belonging to the first MAC address segment or the second MAC address segment in the foregoing first aspect.

Optionally, that the first network device forwards the received packet to the second network device based on the destination MAC address and the forwarding information includes: The first network device queries for the forwarding information based on the destination MAC address and a longest matching principle. The first network device forwards the packet to the second network device based on the forwarding information, where the MAC address segment of the forwarding information matches the destination MAC address. The forwarding information may be a MAC route including the MAC address segment, and the MAC route may be stored in a MAC route table. The longest matching principle is to match, bit by bit, the destination MAC address with each MAC route in the MAC route table maintained by the first network device, until a route with the longest matching degree is found. Based on the longest matching principle, the first network device may not only search for an exactly matched route, for example, a local MAC route maintained by the first network device, but also search for a non-exactly matched route, for example, the MAC route including the MAC address segment. In this way, packet forwarding based on an aggregated MAC route can be implemented while maintaining a conventional mechanism.

Optionally, the forwarding information further includes a port, the port is determined based on an IP address of the second network device, and that the first network device forwards the packet to the second network device based on the forwarding information includes: The first network device forwards the packet through the port

According to a third aspect, a system for generating forwarding information is provided. The system includes a first network device and a second network device.

The first network device is configured to:
receive n packets, where the n packets include n media access control (MAC) addresses, source MAC addresses of the n packets are respectively the n MAC addresses, and n is an integer greater than or equal to 2;
determine n translated MAC addresses based on the n MAC addresses, where the n MAC addresses are in a one-to-one correspondence with the n translated MAC addresses, and the n translated MAC addresses belong to a first MAC address segment;
store the correspondence between the n MAC addresses and the n translated MAC addresses; and
send the first MAC address segment to the second network device.

The second network device is configured to:
receive the first MAC address segment;
generate first forwarding information, where the first forwarding information includes the first MAC address segment; and
forward a first packet based on the first forwarding information and a first destination MAC address of the received first packet, where the first destination MAC address belongs to the first MAC address segment.

According to the foregoing technical solution, on the basis of ensuring that the system can normally complete packet forwarding, a quantity of MAC routes learned by the second network device is significantly reduced, storage pressure of the second network device is relieved, and network resources are saved.

Optionally, the first network device is further configured to:
obtain n updated packets based on the n packets and the n translated MAC addresses, where source MAC addresses of the n updated packets are respectively the n translated MAC addresses; and
send the n updated packets.

Optionally, the first network device is further configured to:
receive a second packet, where a second source MAC address of the second packet belongs to the n MAC addresses of the n packets;
obtain a second translated packet based on the second packet and a second translated MAC address corresponding to the second source MAC address, where a source MAC address of the second translated packet is the second translated MAC address, and the second translated MAC address belongs to the n translated MAC addresses; and
send the second translated packet.

Optionally, the second source MAC address of the second packet is an outer source MAC address, the second packet further includes an inner source MAC address, the inner source MAC address is the same as the outer source MAC address, and the obtaining a second translated packet based on the second packet and a second translated MAC address corresponding to the second source MAC address includes:
replacing each of the outer source MAC address and the inner source MAC address with the second translated MAC address corresponding to the second source MAC address, to obtain the second translated packet.

Optionally, the first network device is further configured to:
receive the first packet from the second network device, where the destination MAC address of the first packet includes a first translated MAC address, and the first translated MAC address belongs to the n translated MAC addresses;
obtain a first translated packet based on the first packet and a first MAC address corresponding to the first translated MAC address, where a destination MAC address of the first translated packet is the first MAC address, and the first MAC address belongs to the n MAC addresses; and send the first translated packet.

Optionally, the first MAC address segment belongs to a first aggregated MAC route sent by the first network device to the second network device, and the first aggregated MAC route may further include an IP address of the first network device.

Optionally, a quantity of MAC addresses in the first MAC address segment is greater than or equal to a quantity of user equipments connected to the first network device.

Optionally, the forwarding a first packet based on the first forwarding information and a first destination MAC address of the received first packet includes:
querying, based on the first destination MAC address and a longest matching principle, for the first forwarding information including the first MAC address segment; and
forwarding the received first packet to the first network device based on the first forwarding information, where the first MAC address segment matches the first destination MAC address.

Optionally, the first forwarding information further includes a port, the port is determined based on an IP address of the first network device, and that the second network device forwards the received first packet to the first network device based on the forwarding information including the first MAC address segment includes: The second network device forwards the received first packet through the port.

Optionally, the first network device is further configured to:
receive m packets, where the m packets include m media access control (MAC) addresses, source MAC addresses of the m packets are respectively the m MAC addresses, and m is an integer greater than or equal to 2;
determine m translated MAC addresses based on the m MAC addresses, where the m MAC addresses are in a one-to-one correspondence with the m translated MAC addresses, and the m translated MAC addresses belong to a second MAC address segment;
store the correspondence between the m MAC addresses and the m translated MAC addresses; and
send the second MAC address segment to the second network device or a third network device.

The second network device or the third network device is configured to:
receive the second MAC address segment;
generate second forwarding information including the second MAC address segment; and
forward a received third packet based on the second forwarding information including the second MAC address segment, where a destination MAC address of the third packet belongs to the second MAC address segment.

According to a fourth aspect, an apparatus for generating forwarding information is provided. The apparatus includes: a first receiving module, configured to receive n packets, where the n packets include n media access control (MAC) addresses, source MAC addresses of the n packets are respectively the n MAC addresses, and n is an integer greater than or equal to 2; a first determining module, configured to determine n translated MAC addresses based on the n MAC addresses, where the n MAC addresses are in a one-to-one correspondence with the n translated MAC addresses, and the n translated MAC addresses belong to a first MAC address segment; a first storage module, configured to store the correspondence between the n MAC addresses and the n translated MAC addresses; and a first sending module, configured to send the first MAC address segment to a first network device.

The apparatus for generating forwarding information sends a first aggregated MAC route to a network device, so that the network device such as an NPE device does not need to learn n MAC routes corresponding to the n MAC addresses, but only needs to learn one aggregated MAC route. Therefore, a quantity of MAC routes learned by the network device is significantly reduced, storage pressure of the network device is relieved, and network resources are saved.

Optionally, the apparatus for generating forwarding information further includes: a first obtaining module, configured to obtain n updated packets based on the n packets and the n translated MAC addresses, where source MAC addresses of the n updated packets are respectively the n translated MAC addresses; and a second sending module, configured to send the n updated packets.

By replacing a source MAC address of a packet with a corresponding translated MAC address, a remote network device can learn the translated MAC address, so as to implement packet sending and receiving based on the translated MAC address.

Optionally, the apparatus for generating forwarding information further includes: a second receiving module, configured to receive a first packet, where a first source MAC address of the first packet belongs to the n MAC addresses of the n packets, where the first obtaining module is further configured to obtain a first translated packet based on the first packet and a first translated MAC address corresponding to the first source MAC address, where a source MAC address of the first translated packet is the first translated MAC address, and the first translated MAC address belongs to the n translated MAC addresses; and a third sending module, configured to send the first translated packet.

After receiving the first packet, the apparatus for generating forwarding information may extract the first source MAC address of the first packet, search for the first translated MAC address corresponding to the first source MAC address based on the stored correspondence between the n MAC addresses and the n translated MAC addresses, and then replace the first source MAC address of the first packet with the first translated MAC address, to obtain the first translated packet, so as to implement packet sending and receiving based on the translated MAC address.

Optionally, the first source MAC address of the first packet is an outer source MAC address, the first packet further includes an inner source MAC address, the inner source MAC address is the same as the outer source MAC address, and the first obtaining module is further configured to replace each of the outer source MAC address and the inner source MAC address with the first translated MAC address corresponding to the first source MAC address, to obtain the first translated packet.

When receiving a packet of a type such as an ARP, the apparatus for generating forwarding information needs to replace each of an inner source MAC address and an outer source MAC address that are in the packet with a translated MAC address, so as to ensure accuracy of packet forwarding and avoid a problem such as a packet loss.

Optionally, the apparatus for generating forwarding information further includes: a third receiving module, configured to receive a second packet, where a destination MAC address of the second packet includes a second translated MAC address, and the second translated MAC address belongs to the n translated MAC addresses; a second obtaining module, configured to obtain a second translated packet based on the second packet and a second MAC address corresponding to the second translated MAC address, where a destination MAC address of the second translated packet is the second MAC address, and the second MAC address belongs to the n MAC addresses; and a fourth sending module, configured to send the second translated packet.

The remote network device sends a packet to a user equipment by using a translated MAC address as a destination MAC address. When receiving the packet, the apparatus that is for generating forwarding information and that has a transceiver function can replace the destination MAC address with an original MAC address based on a locally stored correspondence between the translated MAC address and the original MAC address, so as to complete forwarding of the packet to the user equipment.

Optionally, the first MAC address segment belongs to a first aggregated MAC route sent by the first network device to a second network device, and the first aggregated MAC route further includes an IP address of the first network device. The IP address may enable a network device receiving the first MAC route to determine a port corresponding to the IP address, so that the network device successfully sends, through the port, a packet to the apparatus for generating forwarding information.

Optionally, a quantity of MAC addresses in the first MAC address segment is greater than or equal to a quantity of user equipments connected to the first network device.

The apparatus for generating forwarding information generates a corresponding first MAC address segment based on a determined quantity of user equipments, to ensure that the first MAC address segment can include MAC addresses corresponding to a corresponding quantity of user equipments, thereby improving ease of use and reasonableness of addresses planned by the apparatus. The quantity of the user equipments may be determined based on, for example, a service type and a residential area.

Optionally, the apparatus for generating forwarding information further includes: a fourth receiving module, configured to receive m packets, where the m packets include m media access control (MAC) addresses, source MAC addresses of the m packets are respectively the m MAC addresses, and m is an integer greater than or equal to 2; a second determining module, configured to determine m translated MAC addresses based on the m MAC addresses, where the m MAC addresses are in a one-to-one correspondence with the m translated MAC addresses, and the m translated MAC addresses belong to a second MAC address segment; a second storage module, configured to store the correspondence between the m MAC addresses and the m translated MAC addresses; and a fifth sending module, configured to send the second MAC address segment to the first network device or the second network device.

The apparatus for generating forwarding information may include a plurality of MAC address segments, and different MAC address segments may include a plurality of different MAC addresses. For example, the first network device may allocate MAC addresses of user equipments that apply for different service types to different MAC address segments. Alternatively, for another example, the apparatus may allocate MAC addresses of user equipments belonging to different residential areas to different MAC address segments. This facilitates user equipment management and packet forwarding.

According to a fifth aspect, an apparatus for generating forwarding information is provided. The apparatus for generating forwarding information includes: a first receiving module, configured to receive a MAC address segment sent by a first network device; a generation module, configured to generate forwarding information, where the forwarding information includes the MAC address segment; a second receiving module, configured to receive a packet sent by a second network device, where the packet includes a destination MAC address, and the destination MAC address belongs to the MAC address segment; and a forwarding module, configured to forward the received packet to the first network device based on the destination MAC address and the forwarding information.

The apparatus for generating forwarding information may determine corresponding forwarding information based on a destination MAC address of a packet, and then send the packet to the first network device based on the destination MAC address of the packet and the forwarding information. The destination MAC address may be, for example, the translated MAC address belonging to the first MAC address segment or the second MAC address segment in the foregoing first aspect.

Optionally, the forwarding module is configured to: query for the forwarding information based on the destination MAC address and a longest matching principle; and forward the packet to the first network device based on the forwarding information, where the MAC address segment of the forwarding information matches the destination MAC address.

Based on the longest matching principle, the apparatus for generating forwarding information may not only search for an exactly matched route, for example, a local route maintained by the apparatus for generating forwarding information, but also search for a non-exactly matched route, for example, a MAC route that is sent by the first network device and that includes the MAC address segment. In this way, packet forwarding based on an aggregated MAC route can be implemented while maintaining a conventional mechanism.

Optionally, the forwarding information further includes a port, the port is determined based on an IP address of the second network device, and the forwarding module is configured to forward the packet through the port.

According to a sixth aspect, a network device is provided. The network device includes a memory and a processor, where the processor is configured to invoke a program stored in the memory, to enable the network device to perform the method for generating forwarding information according to any design in the first aspect.

According to a seventh aspect, a network device is provided. The network device includes a memory and a processor, where the processor is configured to invoke a program stored in the memory, to enable the network device to perform the method for generating forwarding information according to any design in the second aspect.

According to an eighth aspect, a network device is provided, and includes a processor. The processor is configured to: be coupled to the memory; and after reading instructions in the memory, perform, according to the instructions, the method for generating forwarding information according to any design in the first aspect.

According to a ninth aspect, a network device is provided, and includes a processor. The processor is configured to: be coupled to the memory; and after reading instructions in the memory, perform, according to the instructions, the method for generating forwarding information according to any design in the second aspect.

According to a tenth aspect, a computer storage medium is provided. The storage medium stores a computer program, and the computer program is used to perform the method for generating forwarding information according to any design in the first aspect.

According to an eleventh aspect, a computer storage medium is provided. The storage medium stores a computer program, and the computer program is used to perform the method for generating forwarding information according to any design in the second aspect.

According to a twelfth aspect, a computer program product including instructions is provided. When the computer program product runs on a network device, the network device is enabled to perform the method for generating forwarding information according to any design in the first aspect, or the network device is enabled to perform the method for generating forwarding information according to any design in the second aspect.

For technical effects brought by any design in the third aspect, the sixth aspect, the eighth aspect, the tenth aspect, and the twelfth aspect, refer to technical effects brought by a corresponding design in the first aspect. For technical effects brought by any design in the third aspect, the seventh aspect, the ninth aspect, the eleventh aspect, and the twelfth aspect, refer to technical effects brought by a corresponding design in the second aspect. Details are not described herein again.

### BRIEF DESCRIPTION OF DRAWINGS

FIG. 1 is a schematic diagram of a structure of a system for generating forwarding information according to an embodiment of this application;
FIG. 2A and FIG. 2B are a schematic flowchart of a method for generating forwarding information according to an embodiment of this application;
FIG. 3 is a schematic diagram of a packet structure according to an embodiment of this application;
FIG. 4 is a block diagram of an apparatus for generating forwarding information according to an embodiment of this application;
FIG. 5 is a block diagram of another apparatus for generating forwarding information according to an embodiment of this application;
FIG. 6 is a block diagram of still another apparatus for generating forwarding information according to an embodiment of this application; and
FIG. 7 is a schematic diagram of a structure of a network device according to an embodiment of this application.

### DESCRIPTION OF EMBODIMENTS

To make objectives, technical solutions, and advantages of this application clearer, the following further describes implementations of this application in detail with reference to the accompanying drawings.

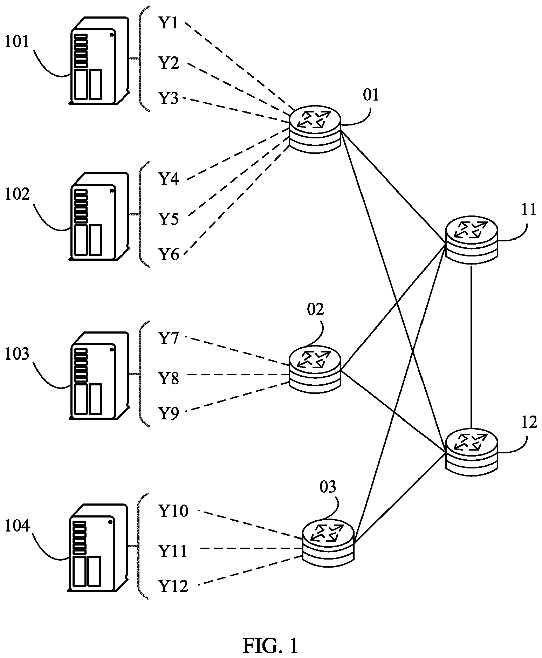

The technical solutions provided in this application may be applied to a network system that can implement packet sending and receiving. In a possible example, as shown in FIG. 1, the network system may include at least one UPE device (where three UPE devices are shown in FIG. 1) and at least one NPE device (where two NPE devices are shown in FIG. 1). The at least one UPE device includes a UPE device 01 to a UPE device 03, and the at least one NPE device includes an NPE device 11 and an NPE device 12. Each UPE device establishes a communication connection to the NPE device 11 and a communication connection to the NPE device 12, and the NPE device 11 may also establish a communication connection to the NPE device 12. The UPE device may be connected to at least one user equipment (where 12 user equipments are shown in FIG. 1). The UPE device 01 is connected to a user equipment 1 (Yl for short) to Y6, the UPE device 02 is connected to Y7 to Y9, and the UPE device 03 is connected to Y10 to Y12. Each user equipment may run as an independent device, or may run on a virtual machine. When the user equipment runs on the virtual machine, the at least one user equipment may be located on a same virtual machine, or may be located on different virtual machines. FIG. 1 shows a case in which a plurality of user equipments run on a same virtual machine. For example, Y1 to Y3 that are connected to the UPE device 01 are located on a same virtual machine 101, Y4 to Y6 that are connected to the UPE device 01 are located on a same virtual machine 102, Y7 to Y9 that are connected to the UPE device 02 are located on a same virtual machine 103, and Y10 to Y12 that are connected to the UPE device 03 are located on a same virtual machine 104.

The UPE device can receive a request packet generated by the at least one user equipment connected to the UPE device, and a request packet generated by any user equipment carries a MAC address of the user equipment. The UPE device may determine a corresponding MAC route based on a MAC address of the at least one user equipment, and send the MAC route to the NPE device, so that the NPE device learns the MAC route. The NPE device can generate forwarding information based on the learned MAC route, and then forward a packet based on the forwarding information. For example, during packet transmission, the UPE device may forward, to the NPE device, the request packet generated by the user equipment. The NPE device obtains a response packet of the request packet, where the response packet carries the MAC address. The NPE device may send, based on the forwarding information and a destination MAC address carried in the response packet, the response packet to a UPE device corresponding to the destination MAC address.

However, because there are a relatively large quantity of UPE devices in the network system, and there are a relatively large quantity of user equipments connected to the UPE device, the NPE device needs to learn a relatively large quantity of MAC routes. Consequently, the NPE device needs to query for a relatively large quantity of pieces of forwarding information, query efficiency is relatively low, and storage pressure is relatively heavy. Further, the NPE device can support a limited quantity of MAC routes. When the NPE device needs to learn a relatively large quantity of MAC routes, the NPE device may fail to meet an actual network requirement. In addition, the MAC routes learned by the NPE device usually need to be updated. When the NPE device needs to learn a relatively large quantity of MAC routes, it takes relatively long time for the NPE device to update the MAC routes learned by the NPE device.

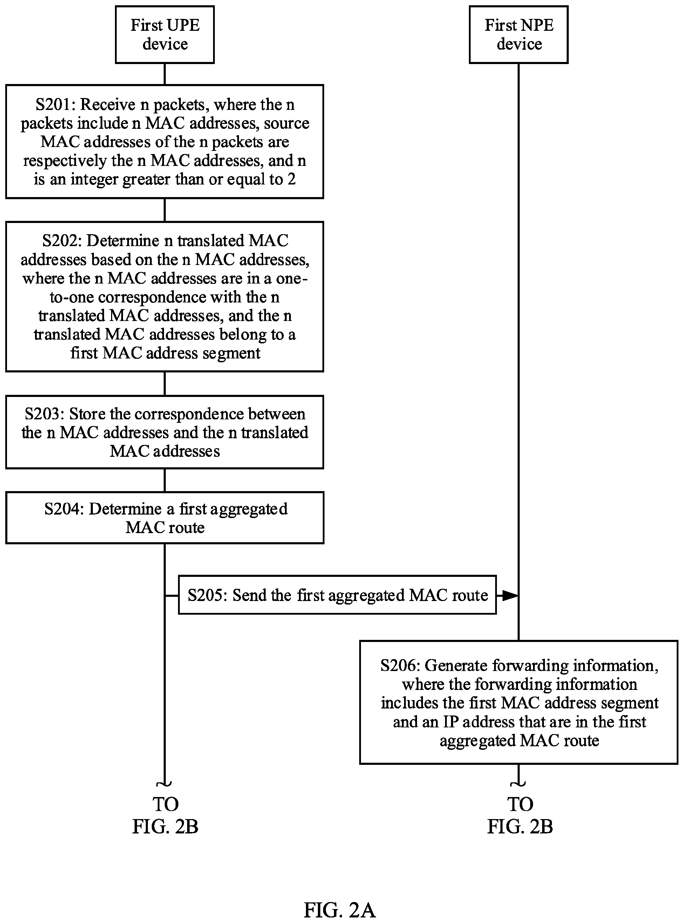

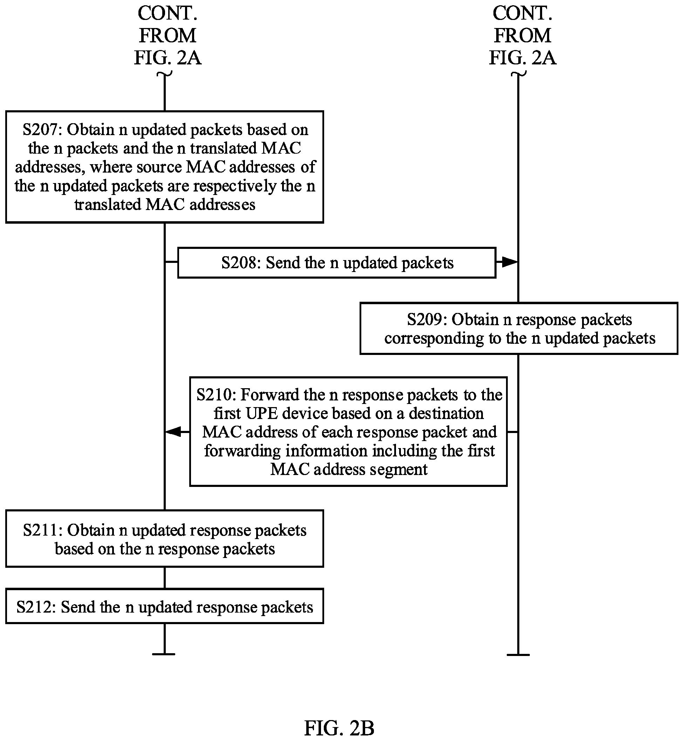

An embodiment of this application provides a method for generating forwarding information. The method may be applied to a network device having a packet sending and receiving function, for example, may be applied to any UPE device (for example, the UPE device 01) and any NPE device (for example, the NPE device 11) connected to the UPE device in the network system shown in FIG. 1. FIG. 2Aand FIG. 2B are a schematic flowchart of a method for generating forwarding information according to an embodiment of this application. An example in which the method is applied to a first UPE device and a first NPE device is used for description in the following embodiment. The method may include the following steps.

S201: The first UPE device receives n packets, where the n packets include n MAC addresses, source MAC addresses of the n packets are respectively the n MAC addresses, and n is an integer greater than or equal to 2.

It should be noted that the n packets may be a plurality of packets consecutively received by the first UPE device, or may be some of the plurality of packets consecutively received by the first UPE device, and the some packets may be nonconsecutive. This is not particularly limited in this embodiment of this application. In an example, the n packets may be request packets generated by n user equipments connected to the first UPE device. In this case, the n MAC addresses represent MAC addresses of the n user equipments. The n packets may be address resolution protocol (Address Resolution Protocol, ARP) packets, or may be packets of another type.

For example, Table 1 shows n MAC addresses (where n=5 is used as an example in Table 1). The MAC address in Table 1 is represented in a hexadecimal form. It should be noted that Table 1 shows only an example of n MAC addresses, and does not constitute a unique limitation on this embodiment of this application.

**Table 1**

| MAC address number | MAC address |
|---|---|
| 1 | 0000-8a51-2c16 bridge domain (bridge domain, BD) 10000 |
| 2 | 0000-7dll-37d7 BD 10000 |
| 3 | 0000-7c08-0c9b BD 10000 |
| 4 | 0000-7c08-0ca8 BD 10000 |
| 5 | 0000-7c08-0cb6 BD 10000 |
| ··· | ··· |

S202: The first UPE device determines n translated MAC addresses based on the n MAC addresses, where the n MAC addresses are in a one-to-one correspondence with the n translated MAC addresses, and the n translated MAC addresses belong to a first MAC address segment.

The first MAC address segment may be used to represent a plurality of MAC addresses. The plurality of MAC addresses belonging to the first MAC address segment have a same fixed-bit substring, but a plurality of variable-bit substrings of the plurality of MAC addresses are different from each other, where the fixed-bit substring is used to identify that the plurality of MAC addresses correspond to the first MAC address segment, and the plurality of variable-bit substrings are used to distinguish between the plurality of MAC addresses.

The first MAC address segment may belong to a first aggregated MAC route. The first aggregated MAC route is a route sent by the first UPE device, and includes the first MAC address segment and an IP address of the first UPE device. In an EVPN, the IP address of the first UPE device may be specifically a peer IP (peer IP) address, and the peer IP address is an IP address used after an EVPN peer relationship is established between the first UPE device and the first NPE device. In the following embodiment, an example in which the first MAC address segment belongs to the first aggregated MAC route is used for description.

In an example, the first MAC address segment includes an aggregated MAC address and a mask. The aggregated MAC address is used to represent a plurality of MAC addresses, and a quantity of bits of the aggregated MAC address is usually the same as that of a common MAC address, that is, 48 bits. The mask may be used to indicate that a corresponding MAC address is the aggregated MAC address.

The following manner 1 may be used to represent the first MAC address segment.

The aggregated MAC address includes a high-bit substring and a low-bit substring. When the aggregated MAC address is represented in a binary form, the high-bit substring includes t (t≥1) bits, which correspond to the first t high bits of the aggregated MAC address, and the low-bit substring includes (48-t) bits, which correspond to the last (48-t) low bits of the aggregated MAC address. The high-bit substring of the aggregated MAC address may be the same as the fixed-bit substring of the plurality of MAC addresses. A length of the mask is the same as the aggregated MAC address, that is, 48 bits. The mask is used to indicate a length of the high-bit substring of the aggregated MAC address. Values of the first t high bits of the mask each are 1, and values of the last (48-t) low bits of the mask each are 0. The high-bit substring is the same as the fixed-bit substring of the plurality of MAC addresses.

Alternatively, the following manner 2 may be used to represent a second MAC address segment.

The aggregated MAC address still includes a high-bit substring and a low-bit substring. When the aggregated MAC address is represented in a binary form, the high-bit substring includes r (r≥1) bits, which correspond to the first r high bits of the aggregated MAC address, and the low-bit substring includes (48-r) bits, which correspond to the last (48-r) low bits of the aggregated MAC address. The low-bit substring of the aggregated MAC address may be the same as the fixed-bit substring of the plurality of MAC addresses. A length of the mask is the same as the aggregated MAC address, that is, 48 bits. The mask is used to indicate a length of the low-bit substring of the aggregated MAC address. Values of the first r high bits of the mask each are 0, and values of the last (48-r) low bits of the mask each are 1. The low-bit substring is the same as the fixed-bit substring of the plurality of MAC addresses.

In another example, the first MAC address segment includes an aggregated MAC address and indication information. The aggregated MAC address is used to represent a plurality of MAC addresses, and a quantity of bits of the aggregated MAC address is usually the same as that of a common MAC address. For example, the indication information may occupy a specified bit length and have a specific value, so as to indicate that a corresponding MAC address is the aggregated MAC address. Optionally, for example, the indication information may further be located in a specific field, and may be assigned with a value to indicate a quantity of significant bits of the aggregated MAC address, where the quantity of significant bits may be used for subsequent route matching calculation.

The plurality of MAC addresses represented by the first MAC address segment may be located in a same MAC address pool (English: address pool). The MAC address pool includes p (p≥1) available MAC addresses, and the p MAC addresses have a same fixed-bit substring. A quantity of MAC addresses included in one MAC address pool may be a fixed value, or may be set based on a requirement. A quantity of MAC addresses included in one MAC address pool may be greater than or equal to a quantity of user equipments connected to the first UPE device. For example, the first UPE device may plan a size of the MAC address pool based on a quantity of user equipments carried on the first UPE device in a metro, plan a size of the MAC address pool based on a quantity of user equipments that are carried on the first UPE device and that perform services of a type, or uniformly plan a size of the MAC address pool based on a quantity of all user equipments carried on the first UPE device. In this way, that the first MAC address segment can include MAC addresses corresponding to a corresponding quantity of user equipments is ensured, thereby improving ease of use and reasonableness of addresses planned by a network device, and facilitating MAC address management on the first UPE device.

For example, it is assumed that a quantity of existing user equipments carried on the first UPE device in a metro A is 2000. In consideration of future service expansion, it is planned and determined that a MAC address pool used for the metro A needs to include 4096 (that is, 212) MAC addresses of user equipments. For example, the first MAC address segment is represented in the foregoing manner 1 and in the binary form, the high-bit substring of the aggregated MAC address of the first MAC address segment may occupy 36 high bits of the entire address bit string. The 4096 MAC addresses have a same fixed-bit substring. The fixed-bit substring also occupies the 36 high bits of the entire address bit string, and content of the fixed-bit substring is the same as that of the high-bit substring. The low-bit substring of the aggregated MAC address may occupy 12 low bits of the entire address bit string. Each variable-bit substring of the 4096 MAC addresses has a length of 12 bits, but each of the 4096 MAC addresses has a different variable-bit substring.

For example, the first MAC address segment may be represented in the binary form as:
0000-0000-0000-0000-0000-0000-0000-0000-0000-xxxx-xxxx-xxxx, where all bits in a high-bit string including 36 high bits are "0"s, and each bit in a low-bit string including 12 low bits may be any value.

The first MAC address segment may represent all the 4906 MAC addresses in the corresponding MAC address pool. A fixed-bit substring of each of the 4096 MAC addresses is the same as a high-bit string of the first MAC address segment, that is, the fixed-bit substring of each of the 4096 MAC addresses occupies 36 high bits of the MAC address, and a value of each bit is 0. A variable-bit substring of each of the 4096 MAC addresses occupies 12 low bits of the MAC address, and variable-bit substrings of the MAC addresses are all different.

For example, MAC addresses in the MAC address pool corresponding to the first MAC address segment may be represented as:
0000-0000-0000-0000-0000-0000-0000-0000-0000-0000-0000-0001;
0000-0000-0000-0000-0000-0000-0000-0000-0000-0000-0000-0010;
0000-0000-0000-0000-0000-0000-0000-0000-0000-0000-0000-0011;
0000-0000-0000-0000-0000-0000-0000-0000-0000-0000-0000-0100;
0000-0000-0000-0000-0000-0000-0000-0000-0000-0000-0000-0101;

For brevity, the MAC addresses in the MAC address pool corresponding to the first MAC address segment may also be represented in the hexadecimal form:
0000-0000-0001;
0000-0000-0002;
0000-0000-0003;
0000-0000-0004;
0000-0000-0005;

The first UPE device may select, based on the n MAC addresses, n MAC addresses as the n translated MAC addresses from the plurality of MAC addresses represented by the first MAC address segment. A manner in which the first UPE device selects n translated MAC addresses corresponding to n MAC addresses in a MAC address pool is not specifically limited in this embodiment of this application. For example, the first UPE device may sequentially determine n translated MAC addresses in the MAC address pool, and use the n translated MAC addresses as the n translated MAC addresses corresponding to the n MAC addresses. Alternatively, the first UPE device may determine, in a random order, the n translated MAC addresses corresponding to the n MAC addresses, provided that it is ensured that the n MAC addresses are in a one-to-one correspondence with the n translated MAC addresses.

For example, the first MAC address segment is represented as 0000-0000-0xxx in the foregoing manner 1 and in the hexadecimal form. Table 2 shows a one-to-one correspondence between n MAC addresses (namely, n translated MAC addresses) that are in the first MAC address segment and n MAC addresses. As shown in Table 2, a MAC address that is in the first MAC address segment and that corresponds to a MAC address 0000-8a51-2c16 BD 10000 is 0000-0000-0001.

**Table 2**

| MAC address number | MAC address | MAC address in the first MAC address segment |
|---|---|---|
| 1 | 0000-8a51-2c16 BD 10000 | 0000-0000-0001 |
| 2 | 0000-7dll-37d7 BD 10000 | 0000-0000-0002 |
| 3 | 0000-7c08-0c9b BD 10000 | 0000-0000-0003 |
| 4 | 0000-7c08-0ca8 BD 10000 | 0000-0000-0004 |
| 5 | 0000-7c08-0cb6 BD 10000 | 0000-0000-0005 |
| ··· | ··· | ··· |

S203: The first UPE device stores the correspondence between the n MAC addresses and the n translated MAC addresses.

Each time after determining a correspondence between a MAC address and a translated MAC address, the first UPE device may store the correspondence for subsequent packet forwarding.

S204: The first UPE device determines the first aggregated MAC route.

The first aggregated MAC route includes the first MAC address segment. For a composition structure of the first MAC address segment, refer to S202. Details are not described herein again.

Optionally, the first aggregated MAC route may further include the IP address of the first UPE device, so that a network device receiving the first aggregated MAC route determines, based on the IP address of the first UPE device, a port used when forwarding a packet to the first UPE device, so as to successfully send the packet to the first UPE device through the port. In the EVPN, the IP address may be specifically the peer IP address.

S205: The first UPE device sends the first aggregated MAC route to the first NPE device.

S206: The first NPE device generates forwarding information, where the forwarding information includes the first MAC address segment and the IP address that are in the first aggregated MAC route.

After receiving the first aggregated MAC route sent by the first UPE device, the first NPE device may search, based on the IP address in the first aggregated MAC route, a locally maintained first routing information table, to determine a port corresponding to the IP address of the first UPE device. The first routing information table may be, for example, a forwarding information base (Forwarding Information Base, FIB) locally maintained and stored by the first NPE device. The first NPE device generates and stores, based on the determined port corresponding to the IP address, forwarding information including, for example, the first MAC address segment, the IP address, and the port The forwarding information is stored in a second routing information table. The forwarding information may be MAC routing information, and the second routing information table may be a MAC route table. Optionally, the second routing information table may further include one or more pieces of forwarding information generated based on one or more other aggregated MAC routes, and the one or more other aggregated MAC routes may be, for example, one or more other aggregated MAC routes sent by the first UPE device to the first NPE device, or may be one or more aggregated MAC routes sent by another UPE device to the first NPE device. Optionally, the second routing information table may further include one or more common MAC routes, and the one or more MAC routes may be, for example, one or more MAC routes locally learned by the first NPE device, may be one or more MAC routes sent by another NPE device, or may be sent by another UPE device that does not have a function of sending an aggregated MAC route.

S207: The first UPE device obtains n updated packets based on the n packets and the n translated MAC addresses, where source MAC addresses of the n updated packets are respectively the n translated MAC addresses.

Source MAC addresses of the n packets that exist before update are respectively the n MAC addresses, and the source MAC addresses of the n updated packets are respectively the n translated MAC addresses. The first UPE device may replace, with a corresponding translated MAC address, each of the source MAC addresses of the n packets that exist before update, to obtain the n updated packets.

Because in any one of the n packets, a plurality of fields may all carry source MAC addresses, the first UPE device needs to replace, with a corresponding translated MAC address, each of the source MAC addresses carried in the packet, to ensure accuracy of packet forwarding, and avoid problems such as a packet parsing error and a packet loss. For example, an outer source MAC address and an inner source MAC address of the packet are the same, and both are source MAC addresses of the packet. The first UPE device may replace each of the outer source MAC address and the inner source MAC address with a translated MAC address corresponding to the source MAC address of the packet, to obtain an updated packet.

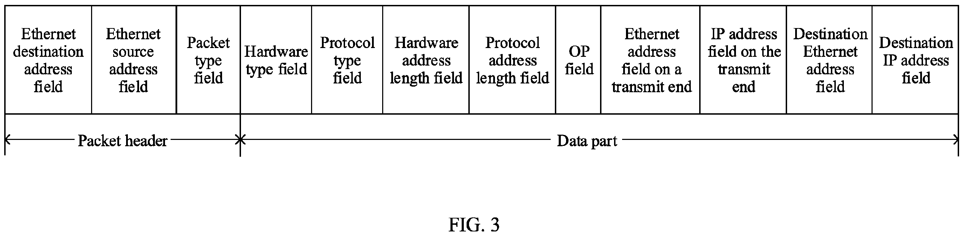

For example, FIG. 3 is a schematic diagram of a packet structure according to an embodiment of this application. The packet is an ARP packet. The packet includes a packet header and a data part. Content of an Ethernet source address field in the packet header may be an outer source MAC address in the ARP packet, and content of an Ethernet address field on a transmit end in the data part may be an inner source MAC address in the ARP packet. The first UPE device needs to replace each of the content of the Ethernet source address field and the content of the Ethernet address field on the transmit end with a translated MAC address.

As shown in FIG. 3, the packet header of the ARP packet may further include an Ethernet destination address field (where content is a destination MAC address) and a packet type field. The data part may further include a destination Ethernet address field (where content is a destination MAC address), a hardware type field, a protocol type field, a hardware address length field, a protocol address length field, an operation (operation, OP) field, an internet protocol (Internet Protocol, IP) address field on the transmit end, a destination IP address field, and the like.

S208: The first UPE device sends the n updated packets to the first NPE device.

By replacing a source MAC address of a packet with a corresponding translated MAC address, and sending the n updated packet, the first NPE device can learn the n translated MAC addresses, so as to implement packet sending and receiving based on the n translated MAC addresses.

S209: The first NPE device obtains n response packets corresponding to the n updated packets.

For example, if all the n updated packets are request packets, the first NPE device may send, based on a destination MAC address carried in each of the n updated packets, the packet to one or more network devices corresponding to n destination MAC addresses, so that the one or more network devices feed back, to the first NPE device, the n response packets corresponding to the n request packets.

It is assumed that a second packet is any one of the n response packets. In this case, a destination MAC address of the second packet includes a second translated MAC address, and the second translated MAC address belongs to the n translated MAC addresses.

The foregoing example describes a case in which the first NPE device obtains n response packets corresponding to the n updated request packets. It may be understood that in other cases, the n updated packets may not be request packets, or only some of the packets are request packets. In these other cases, in S209, the first NPE device does not obtain the response packet, but obtains a to-be-forwarded packet irregularly. The to-be-forwarded packet may be, for example, a data packet that needs to be sent to any user equipment connected to the first UPE device. A destination MAC address of the to-be-forwarded packet is one of translated MAC addresses stored in the first UPE device.

S210: The first NPE device forwards the n response packets to the first UPE device based on a destination MAC address of each response packet and the forwarding information including the first MAC address segment.

The second packet used as the response packet is used as an example. The first NPE device may forward the second packet to the first UPE device based on the second translated MAC address (destination MAC address) in the second packet and the forwarding information.

The first NPE device may search the second routing information table by using the second translated MAC address, select corresponding forwarding information from the second routing information table based on a match between the second translated MAC address and the first MAC address segment, and then send the second packet to a corresponding port in the forwarding information, to forward the second packet to the first UPE device.

The first NPE device may query, based on the second translated MAC address of the second packet, the second routing information table maintained by the first NPE device, where the second routing information table includes the forwarding information generated based on the first aggregated MAC route. The query manner may be, for example, based on an exact matching principle. A manner in which a MAC address segment includes an aggregated MAC address and a mask is still used as an example. In the exact matching principle, the first NPE device needs to perform an operation on the second translated MAC address and the mask of the locally maintained MAC address segment, perform an operation on the aggregated MAC address of the MAC address segment and the mask, and then exactly match a second translated MAC address with an aggregated MAC address until the corresponding forwarding information is selected, where the second translated MAC address and the aggregated MAC address are obtained after the operations are respectively performed on the second translated MAC address and the mask and on the aggregated MAC address and the mask. The query manner may alternatively be, for example, based on a longest matching principle. The longest matching principle refers to matching, bit by bit, the second translated MAC address with the forwarding information in the second routing information table maintained by the first NPE device, until forwarding information with a largest quantity of consecutive matching bits is found. As described in S202, because the aggregated MAC address included in the first MAC address segment is the same as a fixed-bit substring of the second translated MAC address, a first MAC address segment matching the second translated MAC address may be determined based on the longest matching principle. Therefore, the forwarding information including the first MAC address segment is determined. It should be noted that based on the longest matching principle, the first NPE device may not only search for an exactly matched route, for example, a local route maintained by the first NPE device, but also search for a non-exactly matched route, for example, the first aggregated MAC route sent by the first UPE device. In this way, packet forwarding based on the first aggregated MAC route can be implemented while maintaining a conventional mechanism.

It should be noted that, if the first NPE device does not find, in the maintained second routing information table, forwarding information corresponding to the second translated MAC address, the first NPE device determines that the second packet is an unknown unicast packet. In this case, the first NPE device broadcasts the second packet, to send the second packet to all UPE devices (or some UPE devices) connected to the first NPE device, thereby ensuring stable packet forwarding.

S211: The first UPE device obtains n updated response packets based on the n response packets.

The second packet is still used as an example. The first UPE device may obtain a second updated response packet based on the second packet and a second MAC address corresponding to the second translated MAC address, where a destination MAC address of the second updated response packet is the second MAC address, and the second MAC address belongs to the n MAC addresses.

It can be learned from the foregoing operations that the first UPE device has stored the correspondence between the n MAC addresses and the n translated MAC addresses. Because the second MAC address belongs to the n MAC addresses, the first UPE device may search, based on the stored correspondence between the n MAC addresses and the n translated MAC addresses, for the second MAC address corresponding to the second translated MAC address, and replace the second translated MAC address of the second packet with the corresponding second MAC address, to obtain the second updated response packet, so as to implement normal forwarding of a packet to the user equipment.

It should be noted that the foregoing obtaining n translated response packets based on the n response packets is merely used as a possible example. In an actual forwarding process, in S211, the first UPE device may alternatively receive one or more packets of another type, for example, a data packet that needs to be forwarded to the user equipment, and update the one or more packets based on the locally stored correspondence between the n MAC addresses and the n translated MAC addresses, to obtain one or more corresponding updated packets.

Because in the second packet, a plurality of fields may all carry second translated MAC addresses, the first UPE device needs to replace, with a corresponding second MAC address, each of the second translated MAC addresses carried in the second packet. For example, continue referring to FIG. 3. The first UPE device may replace each of the content of the Ethernet destination address field and the content of the destination Ethernet address field that are in the second packet with the second MAC address.

S212: The first UPE device sends the n updated response packets.

The second packet is used as an example. After obtaining the second updated response packet based on the second packet, the first UPE device may send the second updated response packet to a user equipment corresponding to the second MAC address.

If the first UPE device does not find, in the stored correspondence between the n MAC addresses and the n translated MAC addresses, the second MAC address corresponding to the second translated MAC address, the first UPE device determines that a second translated packet is an unknown unicast packet. In this case, the first UPE device broadcasts the packet, to send the second translated packet to all user equipments (or some user equipments) connected to the first UPE device.

In the foregoing embodiment, an example in which the first UPE device determines and stores the correspondence between the n MAC addresses and the n translated MAC addresses is used for description. After the first UPE device stores the correspondence between the n MAC addresses and the n translated MAC addresses, the first UPE device may further receive a first packet sent by the user equipment, where a first source MAC address of the first packet belongs to the n MAC addresses of the n packets. Then, the first UPE device may obtain a first updated packet based on the first packet and a first translated MAC address corresponding to the first source MAC address. A source MAC address of the first updated packet is the first translated MAC address, and the first translated MAC address belongs to the n translated MAC addresses. The first UPE device may send the first updated packet to the first NPE device.

In a possible case, the first packet may be a request packet sent by the user equipment to the first UPE device. The first UPE device has stored a correspondence between a MAC address of the user equipment and a translated MAC address. After receiving the first packet, the first UPE device may extract the first source MAC address of the first packet, search for the first translated MAC address corresponding to the first source MAC address based on the stored correspondence between the n MAC addresses and the n translated MAC addresses in S203, and then replace the first source MAC address of the first packet with the first translated MAC address, to obtain the first updated packet. For the process, refer to the foregoing descriptions. Details are not described herein again.

Optionally, after the first UPE device sends the first updated packet to the first NPE device, the first NPE device may further obtain a response packet of the packet, and then the first NPE device sends the response packet to the first UPE device with reference to S210. The first UPE device then obtains, with reference to S211, a first updated response packet sent to the user equipment, and sends the first updated response packet to the user equipment with reference to S212. Details are not described herein again.

It should be noted that S201 to S212 are described by using an example in which the first MAC address segment belongs to the first aggregated MAC route. The first MAC address segment may alternatively not belong to the first aggregated MAC route, and in this case, S204 and S205 may not be performed. S204 and S205 may be replaced with the following step: The first UPE device sends the first MAC address segment and the IP address of the first UPE device to the first NPE device. In S206, the first NPE device generates forwarding information including the first MAC address segment and the IP address of the first UPE device. Optionally, the first MAC address segment and the IP address of the first UPE device may be separately sent, provided that the first NPE device can associate the first MAC address segment with the IP address of the first UPE device according to a preset rule after receiving the first MAC address segment and the IP address of the first UPE device. The preset rule may be, for example, a common flag bit. Alternatively, the IP address of the first UPE device may be replaced with a device identifier that is of another type and that can be used to identify the first UPE device.

In this embodiment of this application, the first UPE device may include a plurality of MAC address segments, and different MAC address segments include a plurality of different MAC addresses. For example, the first UPE device may allocate MAC addresses of user equipments that apply for different service types to different MAC address segments. Alternatively, for another example, the first UPE device may allocate MAC addresses of user equipments belonging to different residential areas to different MAC address segments. This facilitates user equipment management and packet forwarding. For example, the first UPE device may allocate MAC addresses of user equipments belonging to different areas or belonging to different cities to different MAC address segments.

In the foregoing embodiment, the first MAC address segment is used as an example for description. In another case, the first UPE device may further include an address segment other than the first MAC address segment, for example, a second MAC address segment. The UPE device and the NPE device may also refer to the foregoing method for generating forwarding information based on the first MAC address segment, to implement packet sending and receiving based on the second MAC address segment.

For example, the first UPE device may further receive m packets including m MAC addresses. Source MAC addresses of the m packets are respectively the m MAC addresses, and m is an integer greater than or equal to 2. Then, the first UPE device may determine, based on the m MAC addresses, m translated MAC addresses that are in a one-to-one correspondence with the m MAC addresses, where the m translated MAC addresses belong to the second MAC address segment. After determining the m translated MAC addresses, the first UPE device may store the correspondence between the m MAC addresses and the m translated MAC addresses, and send the second MAC address segment to the first NPE device or a second NPE device.

Then, the first UPE device may obtain m updated packets based on the m packets and the m translated MAC addresses, where source MAC addresses of the m updated packets are respectively the m translated MAC addresses. The first UPE device may send the m updated packets to the first NPE device or the second NPE device. When the m updated packets are request packets, after receiving the m updated packets, the first NPE device or the second NPE device obtains m response packets corresponding to the m updated packets. The first NPE device or the second NPE device generates forwarding information including the second MAC address segment, and forwards the m response packets to the first UPE device based on the forwarding information including the second MAC address segment. The first UPE device obtains m updated response packets based on the received m response packets, and sends the m updated response packets to user equipments having m MAC addresses carried in the m updated response packets.

The second MAC address segment may belong to a second aggregated MAC route. The second aggregated MAC route is a route sent by the first UPE device, and includes the second MAC address segment and the IP address of the first UPE device. In this case, the first UPE device may first determine the second aggregated MAC route, and then send the second aggregated MAC route to the first NPE device or the second NPE device, to send the second MAC address segment to the first NPE device or the second NPE device. For the second aggregated MAC route, refer to the first aggregated MAC route. For this process, refer to S204 and S205. Details are not described herein again.

In another case, a UPE device other than the first UPE device may alternatively generate an aggregated MAC route, and send the aggregated MAC route to the first NPE device, the second NPE device, or any other NPE device.

In the foregoing embodiment, network devices configured to cooperate to complete sending and receiving of the aggregated MAC route and generation of the forwarding information are respectively a UPE device and an NPE device. It may be understood that, in another possible application scenario, a network device of another type may alternatively be configured to implement a corresponding function.

The first UPE device or the first NPE device in the foregoing embodiment may be referred to as a first network device.

When the first UPE device is referred to as the first network device, the first network device may be configured to perform the operation performed by the first UPE device. In addition, in this case, the first NPE device may be referred to as a second network device, and the second NPE device may be referred to as a third network device.

When the first NPE device is referred to as the first network device, the first network device may be configured to perform the operation performed by the first NPE device. In addition, in this case, the first UPE device may be referred to as a second network device, the second NPE device may be referred to as a third network device, and the response packet obtained by the first NPE device in S209 may be sent by a fourth network device.

It should be noted that a MAC address of a user equipment is pre-configured, and usually, MAC addresses of user equipments are relatively discrete. As a result, a MAC address of at least one user equipment cannot be directly aggregated to obtain an aggregated MAC route. However, in this embodiment of this application, the first UPE device may first determine a MAC address pool including a plurality of translated MAC addresses, where the plurality of translated MAC addresses may be consecutive and may be represented by one aggregated MAC route. By replacing a plurality of MAC addresses of packets sent by a plurality of user equipments with a plurality of translated MAC addresses, and advertising the aggregated MAC route that can represent the plurality of translated MAC addresses, MAC address aggregation of the at least one user equipment can be implemented, and normal forwarding of packets based on the aggregated MAC route can be implemented.

According to the method for generating forwarding information in this embodiment of this application, the first UPE device determines, based on the n MAC addresses carried in the received n packets, the n translated MAC addresses corresponding to the n MAC addresses, where the n translated MAC addresses belong to the first MAC address segment. The first UPE device stores the one-to-one correspondence between the n MAC addresses and the n translated MAC addresses, and sends the first MAC address segment to the first NPE device. For example, the first MAC address segment may be included in an aggregated MAC route, so that the first NPE device does not need to learn n MAC routes corresponding to the n MAC addresses, but only needs to learn one aggregated MAC route. Therefore, a quantity of MAC routes learned by the first NPE device is significantly reduced, storage pressure of the first NPE device is relieved, and network resources are saved.

In addition, because a quantity of aggregated routes is relatively small, a probability that the first NPE device cannot meet a specification of a quantity of MAC routes is reduced, and duration in which the first NPE device updates a MAC route stored by the first NPE device is also shortened.

A sequence of operations in the method provided in this embodiment of this application may be properly adjusted, or operations may be correspondingly increased or decreased based on a situation. Any variation readily figured out by a person skilled in the art within the technical scope disclosed in this application shall fall within the protection scope of this application. This is not particularly limited in this embodiment of this application.

An embodiment of this application further provides a network system for generating forwarding information. The network system for generating forwarding information may apply the method for generating forwarding information in the foregoing embodiments. The network system for generating forwarding information may be, for example, the network system shown in FIG. 1.

Optionally, the system for generating forwarding information may include a first network device and a second network device. The first network device may be, for example, the first UPE device shown in FIG. 2A and FIG. 2B, and the second network device may be, for example, the first NPE device shown in FIG. 2A and FIG. 2B. The first network device is configured to: receive n packets, where the n packets include n MAC addresses, source MAC addresses of the n packets are respectively the n MAC addresses, and n is an integer greater than or equal to 2; determine n translated MAC addresses based on the n MAC addresses, where the n MAC addresses are in a one-to-one correspondence with the n translated MAC addresses, and the n translated MAC addresses belong to a first MAC address segment; store the correspondence between the n MAC addresses and the n translated MAC addresses; and send the first MAC address segment to the second network device. Correspondingly, the second network device is configured to: receive the first MAC address segment; generate forwarding information, where the forwarding information includes the first MAC address segment; and forward the received packet based on the forwarding information. The second network device is configured to: receive the first MAC address segment; generate first forwarding information, where the first forwarding information includes the first MAC address segment; and forward a first packet based on the first forwarding information and a first destination MAC address of the received first packet, where the first destination MAC address belongs to the first MAC address segment.

For example, the first MAC address segment may be included in an aggregated MAC route. According to the foregoing technical solution, on the basis of ensuring that the system for generating forwarding information can normally complete packet forwarding, a quantity of MAC routes learned by the second network device is significantly reduced, storage pressure of the second network device is relieved, and network resources are saved.

The first network device may be further configured to: obtain n updated packets based on the n packets and the n translated MAC addresses, where source MAC addresses of the n updated packets are respectively the n translated MAC addresses; and send the n updated packets.

The first network device may be further configured to receive the first packet from the second network device, where the destination MAC address of the first packet includes a first translated MAC address, and the first translated MAC address belongs to the n translated MAC addresses. The first network device obtains a first translated packet based on the first packet and a first MAC address corresponding to the first translated MAC address, where a destination MAC address of the first translated packet is the first MAC address, and the first MAC address belongs to the n MAC addresses. The first network device sends the first translated packet. The first MAC address segment may belong to a first aggregated MAC route sent by the first network device to the second network device, and the first aggregated MAC route may further include an IP address of the first network device.

The first network device may be further configured to receive a second packet, where a second source MAC address of the second packet belongs to the n MAC addresses of the n packets. The first network device obtains a second translated packet based on the second packet and a second translated MAC address corresponding to the second source MAC address, where a source MAC address of the second translated packet is the second translated MAC address, and the second translated MAC address belongs to the n translated MAC addresses. The first network device sends the second translated packet.

When the second packet, for example, an ARP packet, includes a plurality of source MAC addresses, the second source MAC address of the second packet is an outer source MAC address, the second packet further includes an inner source MAC address, the inner source MAC address is the same as the outer source MAC address, and the obtaining a second translated packet based on the second packet and a second translated MAC address corresponding to the second source MAC address includes: The first network device replaces each of the outer source MAC address and the inner source MAC address with the second translated MAC address corresponding to the second source MAC address, to obtain the second translated packet.

The first network device is further configured to receive m packets, where the m packets include m media access control (MAC) addresses, source MAC addresses of the m packets are respectively the m MAC addresses, and m is an integer greater than or equal to 2. The first network device determines m translated MAC addresses based on the m MAC addresses, where the m MAC addresses are in a one-to-one correspondence with the m translated MAC addresses, and the m translated MAC addresses belong to a second MAC address segment. The first network device stores the correspondence between the m MAC addresses and the m translated MAC addresses. The first network device may send the second MAC address segment to the second network device or a third network device.

The second network device or the third network device may be configured to: receive the second MAC address segment; generate second forwarding information including the second MAC address segment; and forward a received third packet based on the second forwarding information including the second MAC address segment, where a destination MAC address of the third packet belongs to the second MAC address segment. The third network device may be, for example, the NPE device in the system shown in FIG. 1.

In conclusion, in the system for generating forwarding information in this embodiment of this application, the first network device determines, based on the n MAC addresses carried in the received n packets, the n translated MAC addresses corresponding to the n MAC addresses, where the n translated MAC addresses belong to the first MAC address segment. The first network device stores the one-to-one correspondence between the n MAC addresses and the n translated MAC addresses, and sends the first MAC address segment to the second network device. For example, the first MAC address segment may be included in an aggregated MAC route, so that the second network device does not need to learn n MAC routes corresponding to the n MAC addresses, but only needs to learn one aggregated MAC route. Therefore, a quantity of MAC routes learned by the second network device is significantly reduced, storage pressure of the second network device is relieved, and network resources are saved.

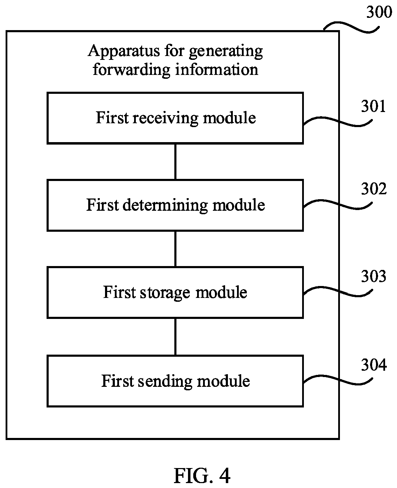

The foregoing describes in detail the method for generating forwarding information in the embodiments of this application with reference to FIG. 1 to FIG. 3. The following describes an apparatus for generating forwarding information in the embodiments of this application with reference to FIG. 4 to FIG. 6.

An embodiment of this application provides an apparatus for generating forwarding information. The apparatus for generating forwarding information may be, for example, the first UPE device in the method shown in FIG. 2A and FIG. 2B. FIG. 4 is a block diagram of an apparatus for generating forwarding information according to an embodiment of this application. The apparatus 300 for generating forwarding information includes:
a first receiving module 301, configured to receive n packets, where the n packets include n MAC addresses, source MAC addresses of the n packets are respectively the n MAC addresses, and n is an integer greater than or equal to 2;
a first determining module 302, configured to determine n translated MAC addresses based on the n MAC addresses, where the n MAC addresses are in a one-to-one correspondence with the n translated MAC addresses, and the n translated MAC addresses belong to a first MAC address segment;
a first storage module 303, configured to store the correspondence between the n MAC addresses and the n translated MAC addresses; and
a first sending module 304, configured to send the first MAC address segment to a first network device.

In conclusion, in the apparatus for generating forwarding information in this embodiment of this application, the first determining module determines, based on the n MAC addresses carried in the n packets received by the first receiving module, the n translated MAC addresses corresponding to the n MAC addresses, where the n translated MAC addresses belong to the first MAC address segment. The first storage module stores the one-to-one correspondence between the n MAC addresses and the n translated MAC addresses, and the first sending module sends the first MAC address segment to the first network device. For example, the first MAC address segment may be included in an aggregated MAC route, so that the first network device does not need to learn n MAC routes corresponding to the n MAC addresses, but only needs to learn one aggregated MAC route. Therefore, a quantity of MAC routes learned by the first network device is significantly reduced, storage pressure of the first network device is relieved, and network resources are saved.

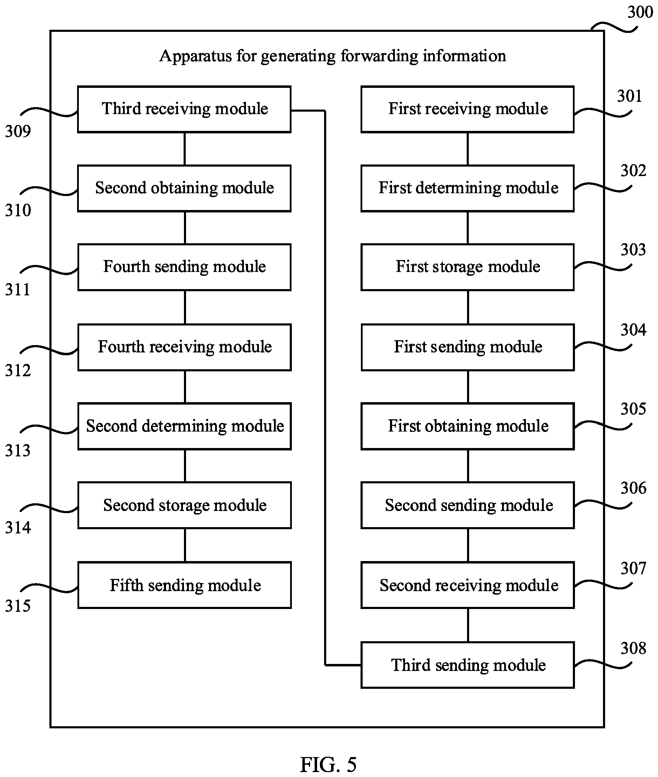

Optionally, FIG. 5 is a block diagram of another apparatus for generating forwarding information according to an embodiment of this application. As shown in FIG. 5, based on FIG. 4, the apparatus 300 for generating forwarding information further includes:
a first obtaining module 305, configured to obtain n updated packets based on n packets and n translated MAC addresses, where source MAC addresses of the n updated packets are respectively the n translated MAC addresses; and
a second sending module 306, configured to send the n updated packets.

By replacing a source MAC address of a packet with a corresponding translated MAC address, a remote network device can learn the translated MAC address, so as to implement packet sending and receiving based on the translated MAC address.

Optionally, as shown in FIG. 5, the apparatus 300 for generating forwarding information further includes:
a second receiving module 307, configured to receive a first packet, where a first source MAC address of the first packet belongs to n MAC addresses of the n packets, where
correspondingly, the first obtaining module 305 is further configured to obtain a first translated packet based on the first packet and a first translated MAC address corresponding to the first source MAC address, where a source MAC address of the first translated packet is the first translated MAC address, and the first translated MAC address belongs to the n translated MAC addresses; and
a third sending module 308, configured to send the first translated packet.

After receiving the first packet, the apparatus for generating forwarding information may extract the first source MAC address of the first packet, search for the first translated MAC address corresponding to the first source MAC address based on a stored correspondence between the n MAC addresses and the n translated MAC addresses, and then replace the first source MAC address of the first packet with the first translated MAC address, to obtain the first translated packet, so as to implement packet sending and receiving based on the translated MAC address.

Optionally, the first source MAC address of the first packet is an outer source MAC address, the first packet further includes an inner source MAC address, the inner source MAC address is the same as the outer source MAC address, and the first obtaining module 305 is further configured to:
replace each of the outer source MAC address and the inner source MAC address with the first translated MAC address corresponding to the first source MAC address, to obtain the first translated packet.

When receiving a packet of a type such as an ARP, the apparatus for generating forwarding information needs to replace each of an inner source MAC address and an outer source MAC address that are in the packet with a translated MAC address, so as to ensure accuracy of packet forwarding and avoid a problem such as a packet loss.

Optionally, as shown in FIG. 5, the apparatus 300 for generating forwarding information further includes:
a third receiving module 309, configured to receive a second packet, where a destination MAC address of the second packet includes a second translated MAC address, and the second translated MAC address belongs to the n translated MAC addresses;
a second obtaining module 310, configured to obtain a second translated packet based on the second packet and a second MAC address corresponding to the second translated MAC address, where a destination MAC address of the second translated packet is the second MAC address, and the second MAC address belongs to the n MAC addresses; and
a fourth sending module 311, configured to send the second translated packet.

The remote network device sends a packet to a user equipment by using a translated MAC address as a destination MAC address. When receiving the packet, the apparatus that is for generating forwarding information and that has a transceiver function can replace the destination MAC address with an original MAC address based on a locally stored correspondence between the translated MAC address and the original MAC address, so as to complete forwarding of the packet to the user equipment.

Optionally, the first MAC address segment belongs to a first aggregated MAC route sent by a first network device to a second network device, and the first aggregated MAC route further includes an IP address of the first network device. The IP address may enable a network device receiving a first MAC route to determine a port corresponding to the IP address, so that the network device successfully sends, through the port, a packet to the apparatus 300 for generating forwarding information.

Optionally, a quantity of MAC addresses in the first MAC address segment is greater than or equal to a quantity of user equipments connected to the first network device.

The apparatus for generating forwarding information generates a corresponding first MAC address segment based on a determined quantity of user equipments, to ensure that the first MAC address segment can include MAC addresses corresponding to a corresponding quantity of user equipments, thereby improving ease of use and reasonableness of addresses planned by the apparatus for generating forwarding information. The quantity of the user equipments may be determined based on, for example, a service type and a residential area.

Optionally, as shown in FIG. 5, the apparatus 300 for generating forwarding information further includes:
a fourth receiving module 312, configured to receive m packets, where the m packets include m media access control (MAC) addresses, source MAC addresses of the m packets are respectively the m MAC addresses, and m is an integer greater than or equal to 2;
a second determining module 313, configured to determine m translated MAC addresses based on the m MAC addresses, where the m MAC addresses are in a one-to-one correspondence with the m translated MAC addresses, and the m translated MAC addresses belong to a second MAC address segment;

a second storage module 314, configured to store the correspondence between the m MAC addresses and the m translated MAC addresses; and
a fifth sending module 315, configured to send the second MAC address segment to the first network device or the second network device.

The apparatus for generating forwarding information may include a plurality of MAC address segments, and different MAC address segments may include a plurality of different MAC addresses. For example, the first network device may allocate MAC addresses of user equipments that apply for different service types to different MAC address segments. Alternatively, for another example, the apparatus for generating forwarding information may allocate MAC addresses of user equipments belonging to different residential areas to different MAC address segments. This facilitates user equipment management and packet forwarding.

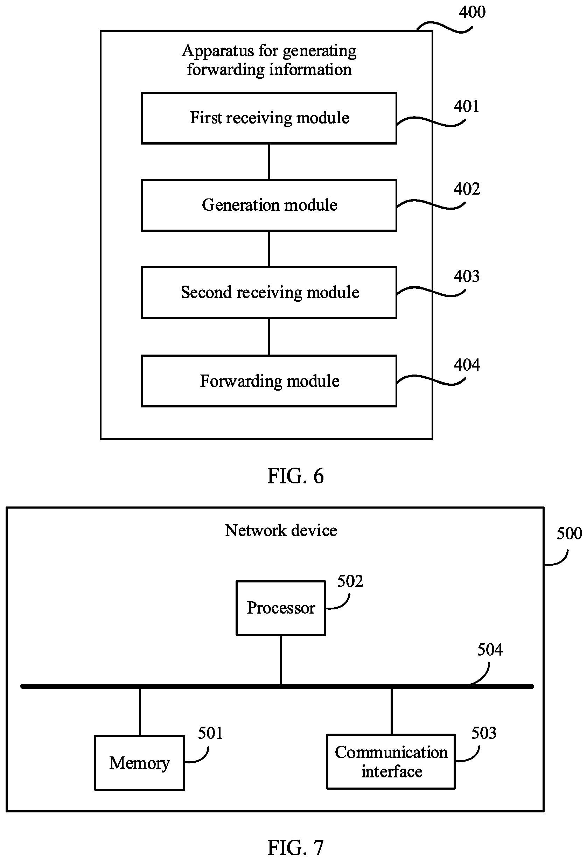

An embodiment of this application provides an apparatus for generating forwarding information. The apparatus for generating forwarding information may be, for example, the first NPE device shown in FIG. 2A and FIG. 2B. FIG. 6 is a block diagram of an apparatus for generating forwarding information according to an embodiment of this application. The apparatus 400 for generating forwarding information includes:
a first receiving module 401, configured to receive a MAC address segment sent by a first network device;
a generation module 402, configured to generate forwarding information, where the forwarding information includes the MAC address segment;
a second receiving module 403, configured to receive a packet sent by a second network device, where the packet includes a destination MAC address, and the destination MAC address belongs to the MAC address segment; and
a forwarding module 404, configured to forward the received packet to the first network device based on the destination MAC address and the forwarding information.

In conclusion, in the apparatus for generating forwarding information in this embodiment of this application, the generation module generates forwarding information including the MAC address segment that is sent by the first network device and that is received by the first receiving module. The forwarding module forwards the received packet to the first network device based on the destination MAC address of the packet received by the second receiving module and the forwarding information generated by the generation module. For example, the MAC address segment may be included in an aggregated MAC route, so that the apparatus for generating forwarding information does not need to learn n MAC routes corresponding to the n MAC addresses, but only needs to learn one aggregated MAC route. Therefore, a quantity of MAC routes learned by the apparatus for generating forwarding information is significantly reduced, storage pressure of the apparatus for generating forwarding information is relieved, and network resources are saved.

Optionally, the forwarding module 404 is configured to: query for the forwarding information based on the destination MAC address and a longest matching principle; and forward the packet to the first network device based on the forwarding information, where the MAC address segment of the forwarding information matches the destination MAC address.

Based on the longest matching principle, the apparatus for generating forwarding information may not only search for an exactly matched route, for example, a local route maintained by the apparatus for generating forwarding information, but also search for a non-exactly matched route, for example, an aggregated MAC route sent by the first network device. In this way, packet forwarding based on an aggregated MAC route can be implemented while maintaining a conventional mechanism.

Optionally, the forwarding information further includes a port, the port is determined based on an IP address of the second network device, and the forwarding module 404 is configured to forward the packet through the port.

An embodiment of this application provides a computer-readable storage medium. The storage medium stores a computer program, and the computer program is configured to perform any method for generating forwarding information in the embodiments of this application.

An embodiment of this application provides a computer program product including instructions. When the computer program product runs on a network device, the network device is enabled to perform the method for generating forwarding information according to any design in the embodiments of this application.

An embodiment of this application provides a network device. The network device may be, for example, the first UPE device shown in FIG. 2A and FIG. 2B, another UPE device shown in FIG. 1, or any other network device. The any other network device may be configured to perform a same function as the first UPE device shown in FIG. 2A and FIG. 2B. The network device includes a processor. The processor is configured to: be coupled to the memory; and after reading instructions in the memory, perform, according to the instructions, the method performed by the first UPE device described in the foregoing embodiments of this application.

An embodiment of this application further provides a network device. The network device may be, for example, the first NPE device shown in FIG. 2A and FIG. 2B, another NPE device shown in FIG. 1, or any other network device. The any other network device may be configured to perform a same function as the first NPE device shown in FIG. 2A and FIG. 2B. The network device includes a processor. The processor is configured to: be coupled to the memory; and after reading instructions in the memory, perform, according to the instructions, the method performed by the first NPE device described in the foregoing embodiments of this application.

In the foregoing embodiments, there may be a plurality of processors. The memory coupled to the processor may be independent of the processor, independent of the network device, or may be in the processor or the network device. The memory may be a physically independent unit, or may be a storage space or network disk on a cloud server, or the like. Optionally, there may be one or more memories. When there are a plurality of memories, the plurality of memories may be located at a same location or different locations, and may be used independently or in cooperation. For example, when the memory is located inside the network device, FIG. 7 is a schematic diagram of a structure of a possible network device 500. The network device 500 includes a processor 502 and a memory 501. The memory 501 is configured to store a program, and the processor 502 is configured to invoke the program stored in the memory 501, so that the network device performs a corresponding method or function. Optionally, as shown in FIG. 7, the network device 500 may further include at least one communication interface 503 and at least one communication bus 504. The memory 501, the processor 502, and the communication interface 503 are connected through a communication bus 504. The communication interface 503 is configured to communicate with another apparatus under control of the processor 502, and the processor 502 may invoke, through the communication bus 504, the program stored in the memory 501.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, the terms "first", "second", and the like are merely intended for description, and shall not be understood as an indication or implication of relative importance. The term "at least one" means one or more, and the term "a plurality of' means two or more, unless expressly limited otherwise. The term "and/or" describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be noted that mutual reference may be made to different types of embodiments such as the method embodiment and the apparatus embodiment that are provided in the embodiments of this application. This is not limited in the embodiments of this application. A sequence of the operations of the method embodiments provided in the embodiments of this application can be properly adjusted, and the operations can be correspondingly added or deleted based on a situation. Any method that can be easily figured out by a person skilled in the art without departing from a technical scope disclosed in this application shall fall within the protection scope of this application, and therefore details are not described again.

In the corresponding embodiments provided in this application, it should be understood that the disclosed system, device, and apparatus may be implemented in other manners. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate parts may or may not be physically separate, and parts described as units may or may not be physical units, may be located at one position, or may be distributed on a plurality of network devices (for example, terminal devices). Some or all of the units may be selected based on actual requirements to achieve the objectives of the solutions of the embodiments.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for generating forwarding information, wherein the method comprises:
receiving, by a first network device, n packets, wherein the n packets comprise n media access control (MAC) addresses, source MAC addresses of the n packets are respectively the n MAC addresses, and n is an integer greater than or equal to 2;
determining, by the first network device, n translated MAC addresses based on the n MAC addresses, wherein the n MAC addresses are in a one-to-one correspondence with the n translated MAC addresses, and the n translated MAC addresses belong to a first MAC address segment;
storing, by the first network device, the correspondence between the n MAC addresses and the n translated MAC addresses; and
sending, by the first network device, the first MAC address segment to a second network device.

2. The method according to claim 1, wherein the method further comprises:
obtaining, by the first network device, n updated packets based on the n packets and the n translated MAC addresses, wherein source MAC addresses of the n updated packets are respectively the n translated MAC addresses; and
sending, by the first network device, the n updated packets.

3. The method according to claim 1 or 2, wherein the method further comprises:
receiving, by the first network device, a first packet, wherein a first source MAC address of the first packet belongs to the n MAC addresses of the n packets;
obtaining, by the first network device, a first translated packet based on the first packet and a first translated MAC address corresponding to the first source MAC address, wherein a source MAC address of the first translated packet is the first translated MAC address, and the first translated MAC address belongs to the n translated MAC addresses; and
sending, by the first network device, the first translated packet.

4. The method according to claim 3, wherein the first source MAC address of the first packet is an outer source MAC address, the first packet further comprises an inner source MAC address, the inner source MAC address is the same as the outer source MAC address, and the obtaining, by the first network device, a first translated packet based on the first packet and a first translated MAC address corresponding to the first source MAC address comprises:
replacing, by the first network device, each of the outer source MAC address and the inner source MAC address with the first translated MAC address corresponding to the first source MAC address, to obtain the first translated packet.

5. The method according to any one of claims 1 to 4, wherein the method further comprises:
receiving, by the first network device, a second packet, wherein a destination MAC address of the second packet comprises a second translated MAC address, and the second translated MAC address belongs to the n translated MAC addresses;
obtaining, by the first network device, a second translated packet based on the second packet and a second MAC address corresponding to the second translated MAC address, wherein a destination MAC address of the second translated packet is the second MAC address, and the second MAC address belongs to the n MAC addresses; and
sending, by the first network device, the second translated packet.

6. The method according to any one of claims 1 to 5, wherein the first MAC address segment belongs to a first aggregated MAC route sent by the first network device to the second network device, and the first aggregated MAC route further comprises an IP address of the first network device.

7. The method according to any one of claims 1 to 6, wherein a quantity of MAC addresses in the first MAC address segment is greater than or equal to a quantity of user equipments connected to the first network device.

8. The method according to any one of claims 1 to 7, wherein the method further comprises:
receiving, by the first network device, m packets, wherein the m packets comprise m media access control (MAC) addresses, source MAC addresses of the m packets are respectively the m MAC addresses, and m is an integer greater than or equal to 2;
determining, by the first network device, m translated MAC addresses based on the m MAC addresses, wherein the m MAC addresses are in a one-to-one correspondence with the m translated MAC addresses, and the m translated MAC addresses belong to a second MAC address segment;
storing, by the first network device, the correspondence between the m MAC addresses and the m translated MAC addresses; and
sending, by the first network device, the second MAC address segment to the second network device or a third network device.

9. A method for generating forwarding information, wherein the method comprises:
receiving, by a first network device, a MAC address segment sent by a second network device;
generating, by the first network device, forwarding information, wherein the forwarding information comprises the MAC address segment;
receiving, by the first network device, a packet sent by a third network device, wherein the packet comprises a destination MAC address, and the destination MAC address belongs to the MAC address segment; and
forwarding, by the first network device, the received packet to the second network device based on the destination MAC address and the forwarding information.

10. The method according to claim 9, wherein the forwarding, by the first network device, the received packet to the second network device based on the destination MAC address and the forwarding information comprises:
querying, by the first network device, for the forwarding information based on the destination MAC address and a longest matching principle; and
forwarding, by the first network device, the packet to the second network device based on the forwarding information, wherein the MAC address segment of the forwarding information matches the destination MAC address.

11. The method according to claim 10, wherein the forwarding information further comprises a port, the port is determined based on an IP address of the second network device, and the forwarding, by the first network device, the packet to the second network device based on the forwarding information comprises:
forwarding, by the first network device, the packet through the port.

12. A system for generating forwarding information, wherein the system comprises a first network device and a second network device, wherein
the first network device is configured to:
receive n packets, wherein the n packets comprise n media access control (MAC) addresses, source MAC addresses of the n packets are respectively the n MAC addresses, and n is an integer greater than or equal to 2;
determine n translated MAC addresses based on the n MAC addresses, wherein the n MAC addresses are in a one-to-one correspondence with the n translated MAC addresses, and the n translated MAC addresses belong to a first MAC address segment;
store the correspondence between the n MAC addresses and the n translated MAC addresses; and
send the first MAC address segment to the second network device; and
the second network device is configured to:
receive the first MAC address segment;
generate forwarding information, wherein the forwarding information comprises the first MAC address segment; and
forward a first packet based on the forwarding information and a destination MAC address of the received first packet, wherein the destination MAC address belongs to the first MAC address segment.

13. The system according to claim 12, wherein the first network device is further configured to:
receive the first packet from the second network device, wherein the destination MAC address of the first packet comprises a first translated MAC address, and the first translated MAC address belongs to the n translated MAC addresses;
obtain a first translated packet based on the first packet and a first MAC address corresponding to the first translated MAC address, wherein a destination MAC address of the first translated packet is the first MAC address, and the first MAC address belongs to the n MAC addresses; and
send the first translated packet.

14. An apparatus for generating forwarding information, wherein the apparatus for generating forwarding information comprises:
a first receiving module, configured to receive n packets, wherein the n packets comprise n media access control (MAC) addresses, source MAC addresses of the n packets are respectively the n MAC addresses, and n is an integer greater than or equal to 2;
a first determining module, configured to determine n translated MAC addresses based on the n MAC addresses, wherein the n MAC addresses are in a one-to-one correspondence with the n translated MAC addresses, and the n translated MAC addresses belong to a first MAC address segment;
a first storage module, configured to store the correspondence between the n MAC addresses and the n translated MAC addresses; and
a first sending module, configured to send the first MAC address segment to a first network device.

15. The apparatus according to claim 14, wherein the apparatus for generating forwarding information further comprises:
a first obtaining module, configured to obtain n updated packets based on the n packets and the n translated MAC addresses, wherein source MAC addresses of the n updated packets are respectively the n translated MAC addresses; and
a second sending module, configured to send the n updated packets.

16. The apparatus according to claim 14 or 15, wherein the apparatus for generating forwarding information further comprises:
a second receiving module, configured to receive a first packet, wherein a first source MAC address of the first packet belongs to the n MAC addresses of the n packets, wherein
the first obtaining module is further configured to obtain a first translated packet based on the first packet and a first translated MAC address corresponding to the first source MAC address, wherein a source MAC address of the first translated packet is the first translated MAC address, and the first translated MAC address belongs to the n translated MAC addresses; and
a third sending module, configured to send the first translated packet.

17. The apparatus according to claim 16, wherein the first source MAC address of the first packet is an outer source MAC address, the first packet further comprises an inner source MAC address, the inner source MAC address is the same as the outer source MAC address, and the first obtaining module is further configured to:
replace each of the outer source MAC address and the inner source MAC address with the first translated MAC address corresponding to the first source MAC address, to obtain the first translated packet.

18. The apparatus according to any one of claims 14 to 17, wherein the apparatus for generating forwarding information further comprises:
a third receiving module, configured to receive a second packet, wherein a destination MAC address of the second packet comprises a second translated MAC address, and the second translated MAC address belongs to the n translated MAC addresses;
a second obtaining module, configured to obtain a second translated packet based on the second packet and a second MAC address corresponding to the second translated MAC address, wherein a destination MAC address of the second translated packet is the second MAC address, and the second MAC address belongs to the n MAC addresses; and
a fourth sending module, configured to send the second translated packet.

19. The apparatus according to any one of claims 14 to 18, wherein the first MAC address segment belongs to a first aggregated MAC route sent by the first network device to a second network device, and the first aggregated MAC route further comprises an IP address of the first network device.

20. The apparatus according to any one of claims 14 to 19, wherein a quantity of MAC addresses in the first MAC address segment is greater than or equal to a quantity of user equipments connected to the first network device.

21. The apparatus according to any one of claims 14 to 20, wherein the apparatus for generating forwarding information further comprises:
a fourth receiving module, configured to receive m packets, wherein the m packets comprise m media access control (MAC) addresses, source MAC addresses of the m packets are respectively the m MAC addresses, and m is an integer greater than or equal to 2;
a second determining module, configured to determine m translated MAC addresses based on the m MAC addresses, wherein the m MAC addresses are in a one-to-one correspondence with the m translated MAC addresses, and the m translated MAC addresses belong to a second MAC address segment;
a second storage module, configured to store the correspondence between the m MAC addresses and the m translated MAC addresses; and
a fifth sending module, configured to send the second MAC address segment to the first network device or the second network device.

22. An apparatus for generating forwarding information, wherein the apparatus for generating forwarding information comprises:
a first receiving module, configured to receive a MAC address segment sent by a first network device;
a generation module, configured to generate forwarding information, wherein the forwarding information comprises the MAC address segment;
a second receiving module, configured to receive a packet sent by a second network device, wherein the packet comprises a destination MAC address, and the destination MAC address belongs to the MAC address segment; and
a forwarding module, configured to forward the received packet to the first network device based on the destination MAC address and the forwarding information.

23. The apparatus according to claim 22, wherein the forwarding module is configured to:
query for the forwarding information based on the destination MAC address and a longest matching principle; and
forward the packet to the first network device based on the forwarding information, wherein the MAC address segment of the forwarding information matches the destination MAC address.

24. The apparatus according to claim 23, wherein the forwarding information further comprises a port, the port is determined based on an IP address of the second network device, and the forwarding module is configured to:
forward the packet through the port.

25. A network device, wherein the network device comprises a processor and a memory, the memory stores a program, and the processor is configured to invoke the program stored in the memory, to enable the network device to perform the method for generating forwarding information according to any one of claims 1 to 8.

26. A network device, wherein the network device comprises a processor and a memory, the memory stores a program, and the processor is configured to invoke the program stored in the memory, to enable the network device to perform the method for generating forwarding information according to any one of claims 9 to 11.

27. A computer storage medium, wherein the storage medium stores a computer program, and the computer program is used to perform the method for generating forwarding information according to any one of claims 1 to 8.

28. A computer storage medium, wherein the storage medium stores a computer program, and the computer program is used to perform the method for generating forwarding information according to any one of claims 9 to 11.
